# EUROPEAN PATENT SPECIFICATION

(11) **EP 1 741 604 B1**
(45) Date of publication and mention of the grant of the patent: **03.09.2008**
(21) Application number: 05106058.0
(22) Date of filing: 04.07.2005
(51) Int. Cl.: B60R 21/23

(54) **A side airbag apparatus for a vehicle**
Seitengassackvorrichtung für ein Kraftfahrzeug
Dispositif de sac de sécurité gonflable latéral pour véhicule

(43) Date of publication of application: 10.01.2007
(73) Proprietor: Ford Global Technologies, LLC, Dearborn, MI 48126 (US)
(72) Inventor: Shaner, Leonard, 48047, New Baltimore (US); Bederka, James, 48167, Northville (US); Zhao, David, 48167, Northville (US); Sobick, Jason, 48067, Royal Oak (US); Stiyer, Michael, 48236, Grosse pointe Farms (US)
(74) Representative: Messulam, Alec Moses

(56) References cited:
- WO-A-20/04065179
- DE-A1- 19 751 898
- US-A1- 2003 168 836

## Description

The present invention relates to a vehicle side airbag apparatus and a seat containing such an airbag apparatus.

Many vehicles today contain side airbags, the purpose of which is to protect a vehicle occupant when the vehicle is involved in a side impact collision. These side airbags may be mounted to a vehicle seat, or may be located under a portion of the interior trim. Side airbags typically attempt to provide some thorax/abdominal coverage for the vehicle occupant, and may also be configured to protect an occupant's head area. Alternatively, the side airbag may work in conjunction with an air curtain, which may deploy downward from the vehicle headliner.

In order to reduce the loading on the thorax--i.e., the upper body, including the ribs some side airbags are inflated or vented to a lower pressure than may otherwise be desirable. For example, an occupant's shoulder and pelvic area can typically sustain higher loading than the thorax region and therefore may benefit by an airbag having a higher pressure. One way to address this situation is to provide a side airbag which is configured to contact the upper regions of an occupant's body, and to also provide a separate, pelvic airbag, configured to contact the lower regions of the occupant's body. Another attempt to deal with this issue is described in U.S. Patent Application Publication No. 2003/0168836 filed by Sato et al., and published on September 11, 2003. Sato et al. describes an airbag apparatus having upper and lower portions, and an intermediate portion therebetween. The intermediate portion is located to correspond with the thorax of a seated occupant. The airbag apparatus of Sato et al. includes a limiting mechanism that limits the bulging of the intermediate portion such that the thickness of the intermediate portion is less than the thickness of the upper and lower portions. The airbag apparatus of Sato et al. is thus configured to contact an occupant's shoulder and pelvic region, while maintaining a space between the deployed airbag and the occupant's thorax. One limitation of the Sato et al. airbag apparatus is that it requires multiple chambers in the airbag which significantly increases the complexity of the airbag apparatus. Moreover, the limiting mechanism used by Sato et al. to limit the bulging of the intermediate portion further adds complexity to the airbag apparatus, which may increase both labour and material costs.

It is an object of this invention to provide a vehicle side airbag apparatus that inhibits loading on the thorax of a vehicle occupant and can be manufactured in an economic manner.

According to a first aspect of the invention there is provided a side airbag apparatus for a vehicle characterised in that the apparatus comprises an airbag having a generally wedge shaped rear aspect when deployed, the generally wedge shaped rear aspect narrowing from an upper region to a lower region so as to reduce the loading on a thorax of an occupant of the vehicle seated adjacent the deployed airbag and an inflator cooperating with the airbag to selectively supply gas thereto to deploy the airbag.

The airbag may have a side aspect including a generally wedge shaped portion when the airbag is deployed, the generally wedge shaped portion including a posterior edge, a top edge extending forward from the posterior edge, and a bottom edge, at least a portion of the bottom edge extending forward and upward from the posterior edge thereby further inhibiting loading on the thorax of an occupant of the vehicle seated adjacent the deployed airbag.

The airbag may have a deployed side aspect including first and second portions, the first portion being generally triangular and narrowing from a back region to a front region thereby further inhibiting loading on the thorax of an occupant of the vehicle seated adjacent the deployed airbag, the second portion is contiguous with the first portion and includes at least one mounting hole..

The inflator may be attached to the airbag at the at least one mounting hole.

The airbag may have a generally wedge shaped top aspect when deployed, the generally wedge shaped top aspect narrowing from a posterior region to a front region.

The airbag may be made from a polymeric material of at least 600 denier.

The inflator may be configured to inflate the airbag to at least 172 kn/m².

The airbag may include a vent hole for venting gas from the airbag.

The airbag may include a reinforced region for providing additional strength to the airbag.

According to a second aspect of the invention there is provided a vehicle seat including a side airbag apparatus in accordance with said first aspect of the invention.

The seat may have a longitudinal seat axis and a top aspect of the airbag when deployed may define a deployed airbag axis that forms an angle of less than 30° with the longitudinal seat axis.

The inflator may be mounted on a portion of the seat

The invention will now be described by way of example with reference to the accompanying drawing of which:-
FIGURE 1 shows a side view of a vehicle seat and airbag apparatus in accordance with the present invention;
FIGURE 2 shows a side view of the airbag shown in Figure 1;
FIGURE 3 shows a rear view of the airbag and inflator shown in Figure 1;
FIGURE 4 shows a top view of the airbag and inflator; and
FIGURE 5 shows a top plan view of the vehicle seat and airbag apparatus shown in Figure 1, relative to a portion of a vehicle door panel.

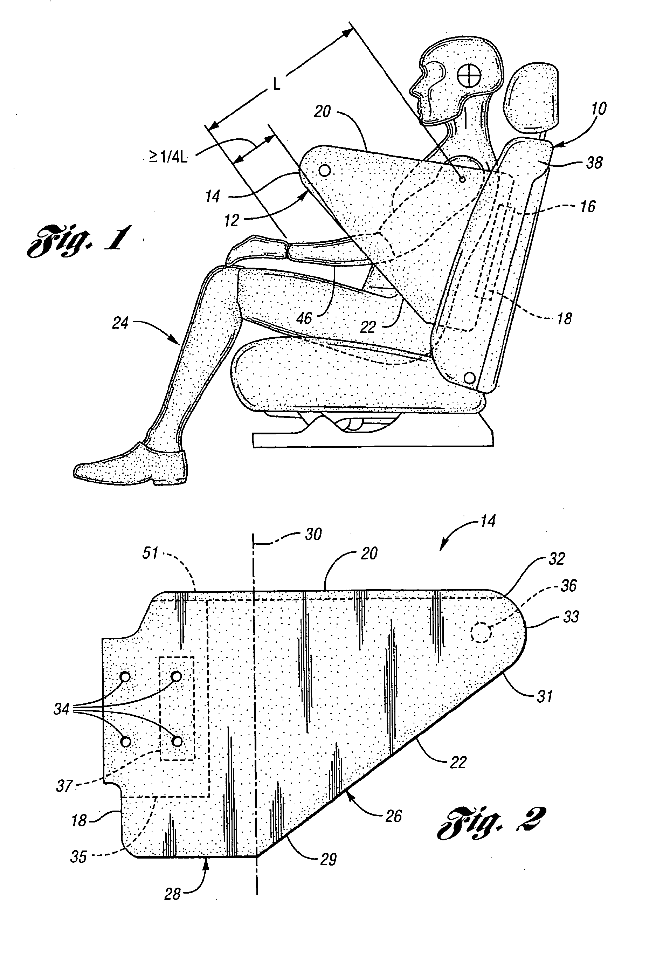

Figure 1 shows a vehicle seat 10 including an airbag apparatus 12 in accordance with the present invention. The airbag apparatus 12 includes an airbag 14 and an inflator 16, which cooperates with the airbag 14 to supply gas to the airbag 14, thereby facilitating deployment of the airbag 14. In the embodiment shown in Figures 1 and 2, the airbag 14 has a generally wedge shaped side aspect when deployed. The generally wedge shaped side aspect includes a posterior edge 18, a top edge 20 which extends forward from the posterior edge 18, and a bottom edge 22, a portion of which extends forward and upward from the posterior edge 18.

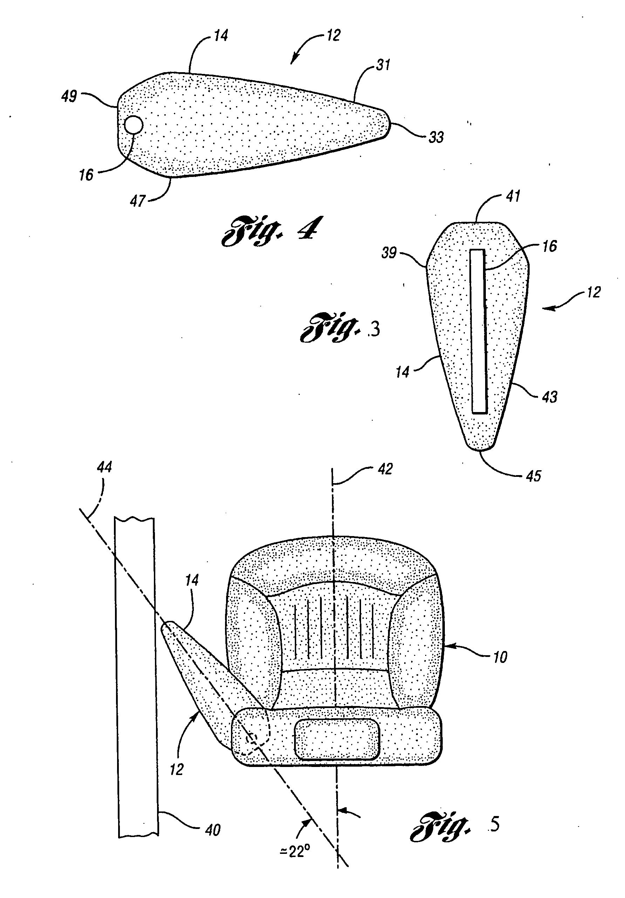

The wedge shaped side aspect of the airbag 14 helps to inhibit loading on the thorax of an occupant 24 seated adjacent the deployed airbag 14. As explained below, in conjunction with Figure 3, the airbag 14 also has a generally wedge shaped rear aspect. Having a rear aspect that is wedge shaped allows the side aspect to be non-wedge shaped e.g., rectangular, round, etc. while still inhibiting loading on the thorax of the vehicle occupant.

Figure 2 shows a side view of the airbag 14 prior to installation into the vehicle seat 10. As shown in Figure 2, the airbag 14 may be generally divided into first and second portions 26, 28. For convenience, an axis 30 is shown to represent a line of demarcation between the two airbag portions 26, 28. It is worth noting that the first and second portions 26, 28 merely divide the airbag 14 according to the geometry of its side aspect. Although an airbag, such as the airbag 14, may be divided internally into one or more chambers, the first and second portions 26, 28 of the airbag 14 denote a convenient means for describing the shape of the airbag 14, which is configured to inhibit loading on the thorax of a vehicle occupant.

As shown in Figure 2, the first portion 26 of the airbag 14 is generally triangular, and narrows from a back region 29, adjacent the axis 30, to a front region 31, adjacent the front 33 of the airbag 14. It is clear that the first portion 26 is not precisely a triangle, but rather, includes a rounded corner 32. The rounded corner 32 helps to eliminate stress concentrations that could occur in an airbag having a sharp corner. This provides another benefit, because, as explained below, it allows the airbag 14 to be inflated to a higher pressure than typical side airbags.

The generally triangular shape of the first portion 26 provides a loading on the shoulder and upper arm of a vehicle occupant, such as the vehicle occupant 24 shown in Figure 1. At the same time, because a portion of the bottom edge 22 extends forward and upward, the airbag 14 will have little or no contact with the lower arm of a vehicle occupant, or the ribs of the occupant. Without such a configuration, a side airbag may directly impact the thorax of a vehicle occupant, or alternatively, may impact an occupant's lower arm, thereby driving the lower arm into the thorax region. In contrast, the airbag 14 eliminates that portion of an airbag that would cause a high degree of rib loading on a vehicle occupant.

The second portion 28 of the airbag 14 is contiguous with the first portion 26, and includes a number of mounting holes 34. The mounting holes 34 are provided to attach the inflator 16 to the airbag 14. This can be done in any convenient manner, for example, by using an inflator having threaded studs extending outward that can traverse the holes 34, and allow the inflator to be attached to a seat, such as the seat 10. Although the mounting holes 34 go through the airbag 14, they are isolated from that portion of the airbag 14 that is filled with gas by the inflator 16.

As shown in Figure 2, the airbag 14 also includes reinforced regions 35, 37, around the mounting holes 34 for providing additional strength to the airbag 14. In the regions 35, 37, additional pieces of material are sewn into the airbag 14 to help ensure that the airbag 14 will maintain its integrity if it is inflated to a relatively high pressure, even at elevated temperatures.

An optional vent hole 36 is provided in one side of the airbag 14 to facilitate venting of the gas from the airbag 14. Because the gas may be vented at a high pressure, a vent hole, such as the vent hole 36, will typically be located on the side of the airbag away from the occupant that is to say, the side facing the vehicle door. Although the vent hole 36 need not be of any particular size, a vent hole having a radius of up to 25 millimetres (mm) has been found to be effective to vent gas from the airbag, and at the same time reduce the stress concentrations associated with a structural discontinuity, such as a hole.

The shape of the airbag 14 also provides advantages for packaging the airbag apparatus 12 within a vehicle seat, such as the seat 10. For example, the front portion of the airbag 14, defined in part by the rounded corner 32, can be rolled backward until it reaches an inflator, such as the inflator 16, mounted at the mounting holes 34. Thus, the airbag 14 does not require an elaborate scheme of folding portions into a complex geometrical configuration in order to ensure proper deployment. Rather, the generally triangular shape of the first portion 26 allows the airbag 14 to be quickly rolled into a packaged configuration. This saves labour costs and reduces assembly time.

In addition, because the first portion 26 has a generally triangular shape and narrows from the back region 29 to the front region 31, it is generally easier to deploy through a tear seam in a cover material, such as the upholstery 38 on the seat 10. In particular, because the smaller, front region 31 of the airbag 14 contacts the tear seam in the cover material, there is a higher stress on the tear seam than if the front region 31 of the airbag 14 were as large as the back region 29. Another benefit of the generally triangular shaped first portion is that the airbag 14 requires less material than airbags having, for example, rectangular side aspects. This results in lower airbag costs, and reduced package space, thereby allowing the airbag 14 to be used in a wide variety of vehicle seats and vehicle platforms.

In addition to inhibiting thorax loading because of its generally wedge shaped side aspect, the airbag 14 also inhibits loading on the thorax by having a generally wedge shaped rear aspect.

Figure 3 shows the rear aspect of the airbag apparatus 12, including the airbag 14 and the inflator 16. As shown in Figure 3, the airbag 14 has a generally wedge shaped rear aspect that narrows from an upper region 39, adjacent the top 41 of the airbag 14, to a lower region 43, adjacent the bottom 45 of the airbag 14. This provides the maximum contact with a vehicle occupant near the top 41 of the airbag 14, which coincides with the shoulder of the vehicle occupant. Because the shoulder can absorb relatively high loading, this design provides a maximum loading where the vehicle occupant is best suited to receive it. In addition, because the lower portion of the rear aspect is narrowed, less of the airbag 14 contacts the thorax of the vehicle occupant and it is less likely to contact the lower portion of an arm of the occupant, which may drive the arm into the thorax.

The airbag 14 also has a generally wedge shaped top aspect, as shown in Figure 4. The generally wedge shaped top aspect narrows from a posterior region 47, adjacent the rear 49 of the deployed airbag 14, to the front region 31. This also helps to provide a maximum loading at an occupant's shoulder, where the occupant is best able to receive it. In addition, because the airbag 14 has a generally wedge shaped top aspect, it is much more easily adapted to smaller vehicles than are non-wedge shaped airbags.

For example, Figure 5 shows a top view of the vehicle seat 10, the airbag apparatus 12 with the airbag 14 deployed, and a portion of a vehicle door panel 40.

Although larger vehicles, such as sport utility vehicles (SUV's) may provide ample room between a vehicle seat and the vehicle door trim panel or B-pillar trim, smaller vehicles are often much more tightly packaged.

The reduced space between the vehicle seat and the aforementioned trim components requires special considerations for side airbags. For example, it may be undesirable to have a side airbag impact the vehicle door trim panel or B-pillar trim as it deploys. Therefore, in certain vehicle architectures, where the space between the vehicle seat and the vehicle door trim panel or B-pillar trim is relatively constrained, it may be necessary to orient the airbag with a smaller forward angle.

Figure 5 shows that the vehicle seat 10 includes a longitudinal seat axis 42. Moreover, the deployed airbag 14 defines an airbag axis 44. In larger vehicles, it may be possible to mount an airbag apparatus such that the airbag axis forms an angle with the longitudinal seat axis that is 30° or greater. This keeps the deployed airbag angled away from the seated occupant, and because of the large space between the vehicle seat and the door panel, there is little or no chance that the airbag will rebound off the door panel to impact the occupant. In smaller vehicles, however, where it is necessary to reduce the angle between the airbag axis and the longitudinal seat axis, an airbag having a non-wedge shaped top aspect may deploy too closely to the seated occupant. In contrast, the airbag 14 of the present invention includes a generally wedge shaped top aspect, which allows the airbag apparatus 12 to be mounted to a portion of the seat 10 such that the airbag axis forms an angle with the longitudinal seat axis that is less than 30°. In particular, as shown in Figure 5, the airbag axis 44 forms an angle with the longitudinal seat axis 42 that is approximately 22°. Because of the wedge shaped top aspect, the airbag 14 will not contact the door panel 40, nor will it be deployed too closely to an occupant seated in the seat 10.

As shown in Figure 1, the generally wedge shaped side aspect of the airbag 14 helps to ensure that maximum loading is applied to the vehicle occupant, where the occupant is best suited to receive it. Although the generally wedge shaped side aspect of the airbag 14 may be configured with any dimensions effective to reduce loading on the thorax of the seated occupant, one such configuration is shown in Figure 1. In particular, the seated occupant 24 may be a one fifth percentile female side impact anthropometric test dummy (ATD), as used in vehicle safety testing. The airbag 14, shown in Figure 1, is configured such that the bottom edge 22 projects up and forward at such an angle, that at least 1/4 of the length (L) of the dummy's arm 46 is outside the airbag 14, when the arm 46 is oriented at a 45° angle with respect to the neutral (down) position, as frequently used in vehicle safety testing. Such a configuration for an airbag has been shown to be effective to minimize the loading on the thorax of a test dummy, both from direct contact by an airbag, as well as from the dummy's arm being forced into the thorax region by the airbag.

Because the present invention provides an airbag apparatus that minimizes loading on the thorax of the seated occupant, the pressure used to inflate the airbag can be greater than is typically used with side airbags. For example, many side airbags are inflated to only 69 to 100 kN/m² (10-15 pounds per square inch). In contrast, the inflator 16 is configured to inflate the airbag 14 with a pressure that is at least 172 kN/m² (25 pounds per square inch), but may be less if desired. Because the airbag 14 can be inflated to higher pressures than typical side airbags, it may be desirable to use a stronger material for the airbag 14, than is used for typical side airbags. For example, many side airbags are made from a 420 denier polymeric material, or the like. Such material may not perform well when exposed to the temperatures associated with an airbag that inflates to 172 kN/m² (25 pounds per square inch) in 20-60 milliseconds (ms). One material shown to be effective for use in an airbag, such as the airbag 14, is a 620 denier polymeric material.

In addition to using a stronger material, such as the 620 denier polymeric material, the airbag 14, as discussed above, also includes reinforced regions 35, 37 (see Figure 2).

Also shown in Figure 2 is a third reinforced region 51. The reinforced region 51 includes two additional layers of material sewn into the airbag 14 along the top edge 20. In addition, extra stitching (not shown) can be used to further reinforce this edge. The reinforced region 51 is oriented along a length of the airbag 14 in the direction of deployment. This helps to provide additional strength to the airbag 14 in a direction of high magnitude forces during deployment. Moreover, the airbag 14 may experience elevated temperatures, particularly in hot weather climates; the reinforced region 51 helps to compensate for any loss of material strength resulting from elevated temperatures. Thus, the present invention provides yet another advantage over typical side airbags: it safely allows the airbag to be inflated to a higher pressure to provide increased protection, while at the same time reducing the loading on the thorax of the seated occupant.

It will be appreciated by those skilled in the art that although the invention has been described by way of example with reference to one or more embodiments it is not limited to the disclosed embodiments and that modifications to the disclosed embodiments or alternative embodiments could be constructed without departing from the scope of the invention.

## Claims

1. A side airbag apparatus (12) for a vehicle comprising an airbag (14) and an inflator (16) cooperating with the airbag (14) to selectively supply gas thereto to deploy the airbag (14) **characterised in that** the airbag has a generally wedge shaped rear aspect when deployed, the generally wedge shaped rear aspect narrowing from an upper region (39) to a lower region (43) so as to reduce the loading on a thorax of an occupant (24) of the vehicle seated adjacent the deployed airbag (14).

2. An airbag apparatus as claimed in claim 1, wherein the airbag (14) has a side aspect including a generally wedge shaped portion when the airbag is deployed, the generally wedge shaped portion including a posterior edge (18), a top edge (20) extending forward from the posterior edge (18), and a bottom edge (22), at least a portion of the bottom edge (22) extending forward and upward from the posterior edge (18) thereby further inhibiting loading on the thorax of an occupant (24) of the vehicle seated adjacent the deployed airbag (14).

3. An airbag apparatus as claimed in claim 1 wherein the airbag (14) has a deployed side aspect including first and second portions (26 and 28), the first portion (26) being generally triangular and narrowing from a back region (29) to a front region (31) thereby further inhibiting loading on the thorax of an occupant (24) of the vehicle seated adjacent the deployed airbag (14), the second portion (28) is contiguous with the first portion (26) and includes at least one mounting hole (34).

4. An airbag apparatus as claimed in claim 1 or in claim 3 wherein the airbag (14) has a generally wedge shaped top aspect when deployed, the generally wedge shaped top aspect narrowing from a posterior region (47) to a front region (31).

5. An airbag apparatus as claimed in any of claims 1 to 4 wherein the airbag (14) is made from a polymeric material of at least 600 denier.

6. An airbag apparatus as claimed in any of claims 1 to 5 wherein the inflator (16) is configured to inflate the airbag to at least 172 kn/m².

7. An airbag apparatus as claimed in any of claims 1 to 6 wherein the airbag (16) includes a vent hole (36) for venting gas from the airbag (14).

8. An airbag apparatus as claimed in any of claims 1 to 7 wherein the airbag includes a reinforced region (35, 37, 51) for providing additional strength to the airbag (14).

9. A vehicle seat **characterised in that** the seat includes a side airbag apparatus (12) as claimed in any of claims 1 to 8.

10. A vehicle seat as claimed in claim 9 wherein the seat (10) has a longitudinal seat axis (42) and a top aspect of the airbag (14) when deployed defines a deployed airbag axis (44) that forms an angle of less than 30° with the longitudinal seat axis (42).

## Patentansprüche

1. Seitenluftsackvorrichtung (12) für ein Fahrzeug mit einem Luftsack (14) und einer mit dem Luftsack (14) zusammenwirkenden Aufblasvorrichtung (16) zur selektiven Speisung desselben mit Gas zum Entfalten des Luftsacks (14),
**dadurch gekennzeichnet, daß** der Luftsack (14) im entfalteten Zustand eine von hinten betrachtet allgemein keilförmige Gestalt aufweist, die sich von einem oberen Bereich (39) zu einem unteren Bereich (43) hin verjüngt, so daß die Belastung des Oberkörpers eines neben dem entfalteten Luftsack (14) sitzenden Insassen (24) des Fahrzeuges gemindert wird.

2. Luftsackvorrichtung nach Anspruch 1, worin der Luftsack (14) bei entfaltetem Luftsack einen von der Seite betrachtet allgemein keilförmigen Abschnitt aufweist, wobei der allgemein keilförmige Abschnitt eine hintere Kante (18) hat, eine von der hinteren Kante (18) aus nach vorne reichende Oberkante (20) und eine Unterkante (22), wobei sich wenigstens ein Teil der Unterkante (22) von der Hinterkante (18) aus nach vorne und nach oben erstreckt, so daß die Belastung des Oberkörpers eines neben dem entfalteten Luftsack (14) sitzenden Insassen (24) des Fahrzeuges weiter verhindert wird.

3. Luftsackvorrichtung nach Anspruch 1, worin der Luftsack (14) im entfalteten Zustand von der Seite betrachtet eine Gestalt hat, welche erste und zweite Abschnitte (26 und 28) beinhaltet, wobei der erste Abschnitt (26) allgemein dreieckig ist und sich von einem hinteren Bereich (29) zu einem vorderen Bereich (31) hin verjüngt, so daß die Belastung des Oberkörpers eines neben dem entfalteten Luftsack (14) sitzenden Insassen (24) des Fahrzeuges weiter verhindert wird, und der zweite Abschnitt (28) an den ersten Abschnitt (26) angrenzt und wenigstens eine Montageöffnung (34) beinhaltet.

4. Luftsackvorrichtung nach Anspruch 1 oder Anspruch 3, worin der Luftsack (14) im entfalteten Zustand von oben betrachtet eine allgemein keilförmige Gestalt hat, wobei sich die von oben betrachtet allgemein keilförmige Gestalt von einem hinteren Bereich (47) aus zu einem vorderen Bereich (31) hin verjüngt.

5. Luftsackvorrichtung nach einem beliebigen der Ansprüche 1 bis 4, worin der Luftsack (14) aus einem Polymermaterial mit wenigstens 600 Denier hergestellt ist.

6. Luftsackvorrichtung nach einem beliebigen der Ansprüche 1 bis 5, worin die Aufblasvorrichtung (16) ausgelegt ist, den Luftsack auf wenigstens 172 kn/m² aufzublasen.

7. Luftsackvorrichtung nach einem beliebigen der Ansprüche 1 bis 6, worin der Luftsack (16) eine Auslaßöffnung (36) zum Ablassen von Gas aus dem Luftsack (14) aufweist.

8. Luftsackvorrichtung nach einem beliebigen der Ansprüche 1 bis 7, worin der Luftsack einen verstärkten Bereich (35, 37, 51) aufweist, um dem Luftsack (14) zusätzliche Festigkeit zu verleihen.

9. Fahrzeugsitz, **dadurch gekennzeichnet, daß** der Sitz eine Seitenluftsackvorrichtung (12) nach einem beliebigen der Ansprüche 1 bis 8 beinhaltet.

10. Fahrzeugsitz nach Anspruch 9, worin der Sitz (10) eine Sitz-Längsachse (42) aufweist und worin eine von oben betrachtete Gestalt des Luftsackes (14) im entfalteten Zustand eine Luftsackachse (44) bildet, welche einen Winkel von weniger als 30° mit der Sitz-Längsachse (42) einschließt.

## Revendications

1. Dispositif de sac de sécurité gonflable latéral (12) pour un véhicule comprenant un sac de sécurité gonflable (14), et un gonfleur (16) qui coopère avec le sac de sécurité gonflable (14) pour lui fournir du gaz de façon sélective afin de déployer le sac de sécurité gonflable (14), **caractérisé en ce que** le sac de sécurité gonflable possède un aspect arrière ou vu de derrière généralement cunéiforme lorsqu'il est déployé, l'aspect arrière généralement cunéiforme rétrécissant depuis une région supérieure (39) vers une région inférieure (43) de manière à réduire la charge sur le thorax d'un occupant (24) du véhicule, qui est assis de façon adjacente au sac de sécurité gonflable déployé (14).

2. Dispositif de sac de sécurité gonflable selon la revendication 1, dans lequel le sac de sécurité gonflable (14) possède un aspect latéral incluant une portion généralement cunéiforme lorsque le sac de sécurité gonflable est déployé, la portion généralement cunéiforme comprenant une arête postérieure (18), une arête supérieure (20) qui s'étend en avant de l'arête postérieure (18), et une arête inférieure (22), une portion au moins de l'arête inférieure (22) s'étendant en avant de l'arête postérieure (18) et de façon ascendante, inhibant ainsi davantage la charge sur le thorax d'un occupant (24) du véhicule qui est assis de façon adjacente au sac de sécurité gonflable déployé (14).

3. Dispositif de sac de sécurité gonflable selon la revendication 1, dans lequel le sac de sécurité gonflable (14) possède un aspect latéral déployé incluant des première et deuxième portions (26 et 28), la première portion (26) étant généralement triangulaire et rétrécissant depuis une région arrière (29) vers une région frontale (31), inhibant ainsi davantage la charge sur le thorax d'un occupant (24) du véhicule qui est assis de façon adjacente au sac de sécurité gonflable déployé (14), la deuxième portion (28) étant contiguë avec la première portion (26) et possédant au moins une ouverture de montage (34).

4. Dispositif de sac de sécurité gonflable selon la revendication 1 ou la revendication 3, dans lequel le sac de sécurité gonflable (14) possède un aspect supérieur généralement cunéiforme lorsqu'il est déployé, l'aspect supérieur généralement cunéiforme rétrécissant depuis une région postérieure (47) vers une région frontale (31).

5. Dispositif de sac de sécurité gonflable selon l'une des revendications 1 à 4, dans lequel le sac de sécurité gonflable (14) est réalisé dans un matériau polymère d'au moins 600 deniers.

6. Dispositif de sac de sécurité gonflable selon l'une des revendications 1 à 5, dans lequel le gonfleur (16) est apte à gonfler le sac de sécurité gonflable jusqu'à au moins 172 kN/m².

7. Dispositif de sac de sécurité gonflable selon l'une des revendications 1 à 6, dans lequel le sac de sécurité gonflable (14) inclut un évent (36), destiné à purger le gaz du sac de sécurité gonflable (14).

8. Dispositif de sac de sécurité gonflable selon l'une des revendications 1 à 7, dans lequel le sac de sécurité gonflable possède une région renforcée (35, 37, 51) pour fournir une résistance supplémentaire au sac de sécurité gonflable (14).

9. Un siège de véhicule, **caractérisé en ce que** le siège inclut un dispositif de sac de sécurité gonflable (12) selon l'une des revendications 1 à 8.

10. Un siège de véhicule selon la revendication 9, dans lequel le siège (10) possède un axe de siège longitudinal (42) et un aspect supérieur du sac de sécurité gonflable (14), lorsqu'il est déployé, définit un axe de sac de sécurité gonflable (44), qui forme un angle inférieur à 30° vis-à-vis de l'axe de siège longitudinal (42).
